# EUROPEAN PATENT SPECIFICATION

(11) **EP 0 688 949 B1**
(45) Date of publication and mention of the grant of the patent: **01.03.2000**
(21) Application number: 95905227.5
(22) Date of filing: 05.01.1995
(51) Int. Cl.: F02M 35/024, B01D 46/10, B01D 46/12

(54) **AIR FILTER DEVICE FOR INTAKE AIR FOR AN ENGINE**
EINLASSFILTER FÜR EINE BRENNKRAFTMASCHINE
DISPOSITIF DE FILTRE A AIR POUR L'AIR D'ADMISSION D'UN MOTEUR

(30) Priority: 06.01.1994 JP 1131394
(43) Date of publication of application: 27.12.1995
(73) Proprietor: HKS CO., LTD., Fujinomiya-shi, Shizuoka 418-01 (JP)
(72) Inventor: KATTA, Masahiko, Shizuoka 418-01 (JP)
(74) Representative: Casalonga, Axel
(86) International application number: JP9500003
(87) International publication number: WO9518920

(56) References cited:
- FR-A- 483 814
- FR-A- 1 025 281
- FR-A- 2 170 744
- GB-A- 282 382
- JP-A- 6 272 630
- JP-A- 53 036 771
- JP-A- 63 218 227
- JP-U- 1 065 619
- JP-U- 1 095 224
- JP-U- 2 003 055
- JP-U- 2 025 006
- JP-U- 3 092 552
- JP-U- 57 144 267
- JP-U- 58 022 451
- JP-U- 58 178 459
- JP-U- 59 013 662
- JP-U- 60 034 555
- JP-Y- 59 022 282
- JP-Y- 59 039 171
- US-A- 3 431 335

## Description

### FILED OF THE INVENTION

The present invention relates to an engine intake-air filter apparatus.

### BACKGROUND OF THE INVENTION

An engine intake-air cleaner apparatus is incorporated in an intake-air system of an engine in order to remove dust from intake-air and to reduce noise of intake-air.

There exists a conventional air-cleaner apparatus adapted an air-filter apparatus to be removably fitted in an air-cleaner casing which is attached to an air-cleaner conduit. In this air-filter apparatus, a filter support member such as a net or the like is stretched in a filter attaching frame of an outer structural member which is held in the air-filter casing so as to support an air-cleaner filter with the use of the filter support member.

There exists another air-filter apparatus which is attached directly to the intake-air port of an air cleaner casing. In this air-filter apparatus, a filter support member such as an inner net is stretched in a filter attaching frame of an outer structural member such as a funnel attached to an air-cleaner conduit, and an air-cleaner filter is supported with the use of the filter support member.

In conventional air-filter apparatuses for an air-cleaner apparatus, although the filter is held by any means in the filter attaching frame of the outer frame structure member, the filter is merely set and held on the filter support member.

Further, in the conventional air-filter apparatuses, the filter support member is generally formed of hard metal materials such as stainless steel wires or a perforated stainless steel sheet.

JP-A-06272630 reveals an air cleaner filter comprising layers of filter elements disposed like a semi-sphere. The marginal edges of the filter elements are integrated to hold the semi-sperical shape, and the inner most layer may have 3-dimensional cuts.

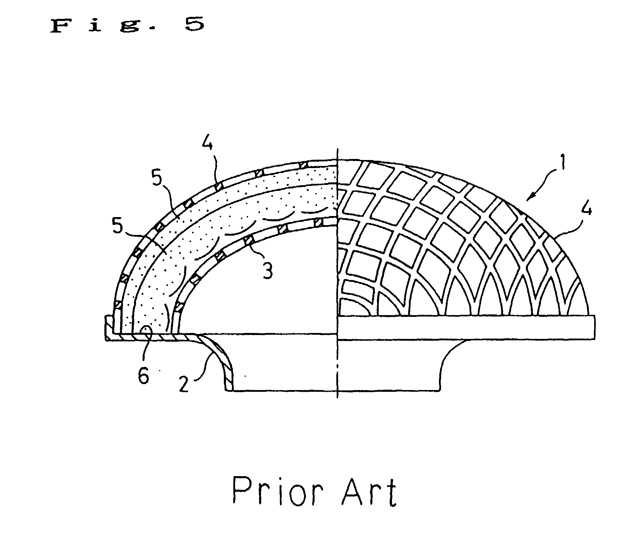

One example of conventional air-cleaner apparatuses will be hereinbelow explained with reference to **Fig. 5** illustrating an air-filter apparatus **1** attached directly to the intake-air port of an air-cleaner apparatus in which a flared opening of a funnel **2** is covered with an inner net **3** and an outer net **4** between which an air-cleaner filter **5** having a two-layer structure is laid.

The end parts of the inner net **3** are fixed to a flat part **6** of a funnel **2** while the end parts of the outer net **4** are removably secured to the end parts of the flat part **6**. Further, each of these inner and outer nets **3, 4** is originally a rectangular net which is formed into a substantially semi-spherical shape. Further, an air-cleaner filter **5** is a wet-type filter which is impregnated with oil (having a coefficient of viscosity of 3 to 5 pa.s) in order to enhance the dust collecting effect.

However, in the air-filter apparatus **1** shown in **Fig. 5**, the inner net **3** and the outer net **4** are laid respectively over the front and rear surfaces of the filter **5**, and accordingly, the intake-air opening area of the filter **5** is decreased so that the intake-air resistance possibly increases.

In the conventional filter apparatus **1**, it is desirable to increase the flared opening of the funnel **2** in order to enhance the intake-air efficiency. However, if the size of the funnel is increased, the air-filter apparatus **1** requires a larger-size which is unpreferable for an air-filter apparatus adapted to be located in a limited space.

Further, since the outer net **4** is a rectangular net which is formed into a substantially spherical shape, a curved part thereof is deformed, that is, its rectangular shape is deformed into a diamond-like shape or the like, and more specifically, each of the comers thereof is greatly deformed. This deformation hinders the flow of the intake-air, and accordingly, the intake-air efficiency is possibly lowered.

Further, since the air-cleaner filter **5** is impregnated with oil having a small coefficient of viscosity, in case the size of pores in porous resin (such as polyurethane resin) which forms the air-cleaner filter is large, the impregnation of oil would be insufficient. Accordingly, the air-cleaner filter **5** is made of porous resin which is impregnated with the oil, resulting in increased flow-passage resistance of the air-cleaner filter **5**. In view of this point, the intake-air efficiency is lowered.

An object of the present invention is to provide an air-cleaner apparatus which can enhance the intake-air efficiency without increasing the size of the air-cleaner apparatus.

According to the present invention there is provided an air-cleaner apparatus wherein a flared opening of a funnel is covered with an inner frame and an outer frame between which a filter is interposed, comprising a lip part that is integrally planted on the inner peripheral surface of the flared opening of the above-mentioned funnel, opposing the flowing direction of the intake-air such that a negative pressure area is induced upstream of and below said lip part.

The inner frame may be composed of a top part which extends to the center part of the flared opening of the funnel, and a plurality of frame bars radially extend from the top part.

Preferably the outer frame is formed of a honeycomb-like net.

The filter may be formed of porous resin having a large pore size impregnated with an adhesive having a high coefficient of viscosity.

The present invention offers the following three effects:
(1) Since the lip part is planted on the inner peripheral surface of the flared opening of the funnel, a negative pressure area is induced upstream of and below the lip part due to the stream of intake-air so that the flow rate of intake-air flowing into the funnel from the outer peripheral part of the flared opening of the funnel is heightened, and as a result, the volume of intake-air is increased. Thereby it is possible to enhance the intake-air efficiency without the size of the air-cleaner apparatus being increased by increasing the size of the funnel.
(2) Since the outer frame is formed of a honeycomb-like net in a substantially semi-spherical shape, the honeycomb-like deformation is equally divided into six portions, and accordingly, the deformation at each corner of the honeycomb-like (hexagonal) filter is less than that of the conventional rectangular shape net. Accordingly, it is possible to enhance the intake-air efficiency without hindering the stream of intake-air.
(3) Since the filter is formed of porous resin impregnated with an adhesive having a high coefficient of viscosity, the adhesive can enhance the dust collecting efficiency, and since the pore size of the porous resin is large, the flow passage resistance of the filter becomes small, therefore, it is possible to enhance the intake-air efficiency.

### BRIEF DESCRIPTION OF THE DRAWINGS:

**Figs. 1A** and **1B** show an embodiment of an air-cleaner apparatus according to the present invention, in which **Fig. 1A** is a side sectional view illustrating the air-cleaner apparatus, and **Fig.1B** is a plan view illustrating the air-cleaner apparatus from which a filter and an outer net are eliminated;
**Figs. 2A** and **2B** show an external appearance of the air-cleaner apparatus shown in **Figs. 1A** and **1B**, in which **Fig. 2A** is a side view illustrating the air-cleaner apparatus, and **Fig. 2B** is a plan view illustrating the air-cleaner apparatus;
**Figs. 3A** and **3B** show a funnel in the air-cleaner apparatus shown in **Figs. 1A** and **1B**, in which **Fig. 3A** is a side sectional view illustrating the funnel, and **Fig. 3B** a plan view illustrating the funnel;
**Figs. 4A** and **4B** show an inner frame in the air-cleaner apparatus shown in **Figs.1A** and **1B**, in which **Fig. 4A** is a side sectional view illustrating the inner frame, and **Fig. 4B** is a plan view illustrating the inner frame; and
**Fig. 5** is a side view illustrating a left half part of a conventional air-cleaner apparatus.

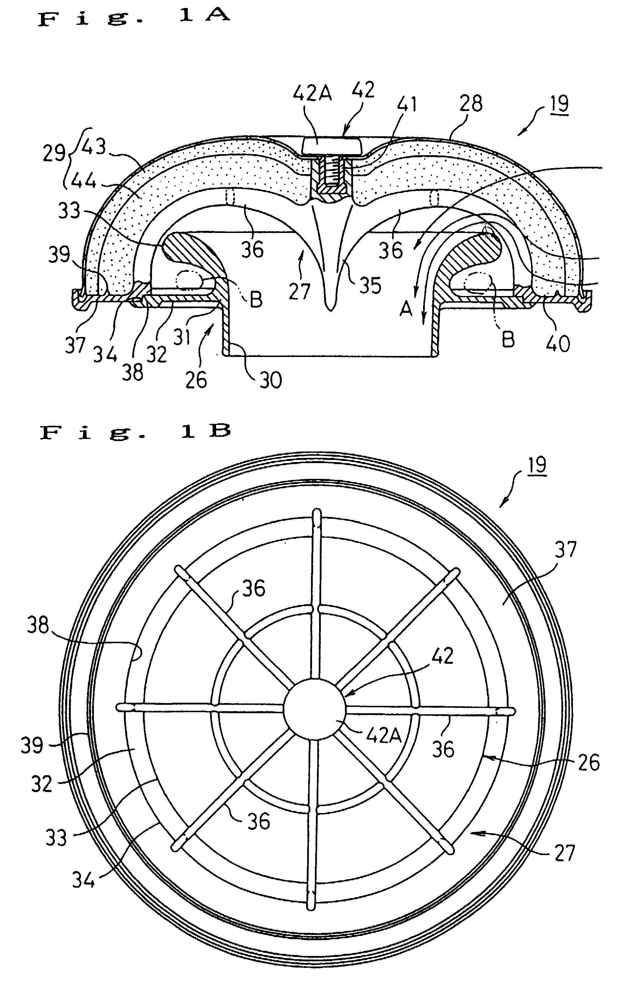

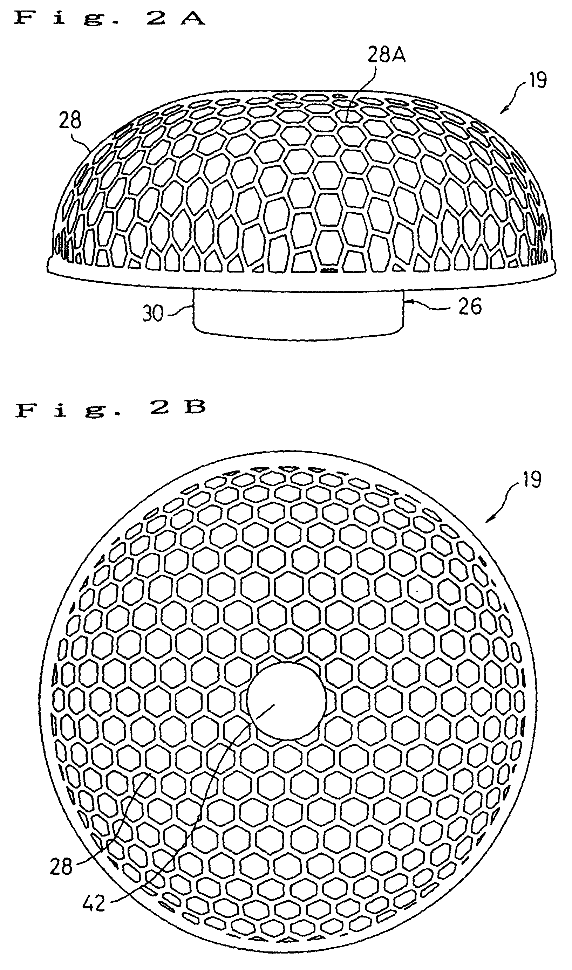

Referring to **Figs. 1** to **4**, an air-cleaner apparatus **19** is composed of a funnel **26**, an inner frame **27**, an outer net **28** as an outer frame and a filter **29**, for removing dust from air introduced into an engine and enhancing the intake-air efficiency. The funnel **26** and the inner frame **27** are made of synthetic resin such as plastic while the outer net **28** is made of metal such as iron, and the filter **29** is made of porous resin.

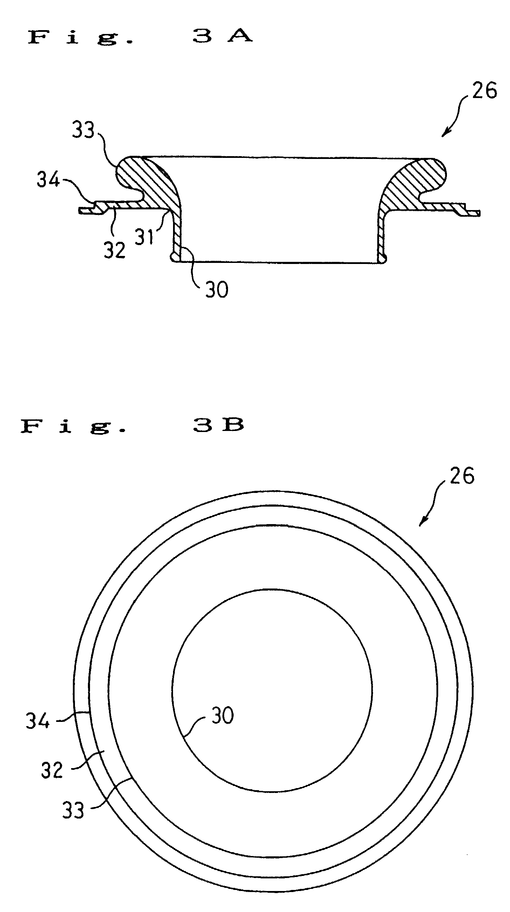

As shown in **Figs. 1** and **3**, the funnel **26** has a duct part **30** which is connected thereto with a flared opening **31** whose diameter is gradually increased, and a flat part **32** is connected to the flared opening **31**. Further, a lip part **33** is integrally planted on the inner peripheral surface of the flared opening **31**. The duct part **30** can be connected to an air flow meter **20**. Further, an engaging stepped part **34** is formed at the outer periphery of the flat part **32**. An engaging end (which will be explained later) of the inner frame **27** can be engaged with the engaging stepped part **34**.

The lip part **33** is formed opposing the stream A of air flowing into the air-cleaner apparatus **19**, and this stream A of air induces a negative pressure area B between the lip part **33** and the flat part **32**. Under the effect of this negative pressure area B, the flow rate of air flowing into the funnel **26** along a flat part **37** (which will be explained hereinbelow) of the inner frame **27** can be increased.

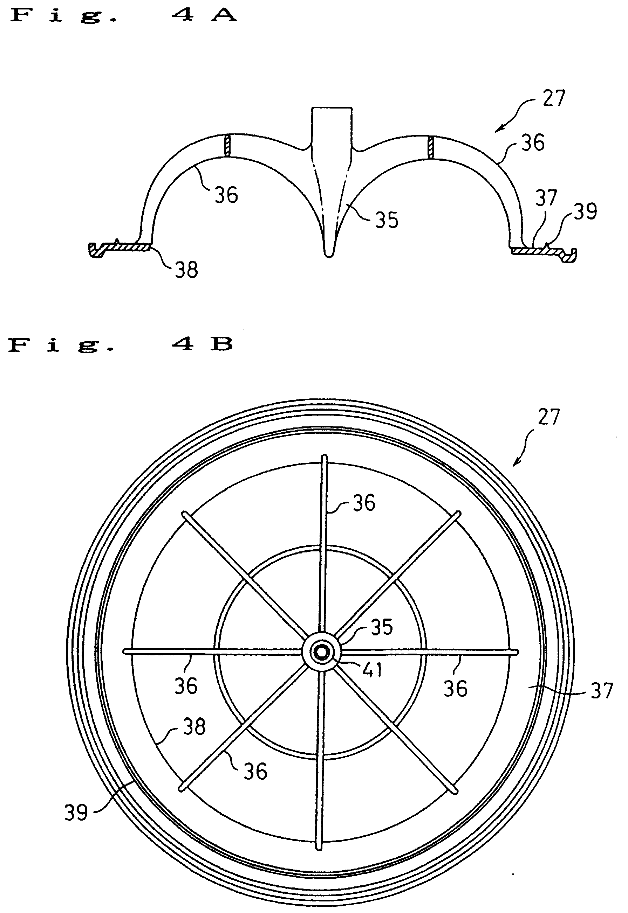

As shown in **Figs. 1** and **4**, the inner frame **27** is composed of a top part **35** extending from the flared opening part **31** of the funnel **26** to the center part of the duct part **30**, frame bars **36** with which the lip part **33** of the funnel **26** is covered, and which radially extend from the top part **35**, and a flat part **37** extend radially outward from the frame bars **36**, orthogonal to the top part **35**. The frame bars **36** have a stream line cross-sectional shape. The top part **35** and the frame bars **36** smooth the stream A of air flowing into the funnel **26**.

The flat part **37** is engaged at its inner peripheral edge with an engaging edge **38** so as to be engaged with the engaging stepped part **34** of the funnel **26**, and accordingly, the inner frame **27** is fitted to the funnel **26**. In this assembled condition, the flat part **37** of the inner frame **27** is flush with the flat part **32** of the funnel **26** so as to define a flat surface, whereby it is possible to smooth the stream of air flowing along the flat parts **37, 32**.

The flat part **37** of the inner frame **27** is formed at its outer surface with an engaging ridge **39**. This engaging ridge **39** has a triangular cross-sectional shape and is adapted to stick into the end surface **40** of the filter **29** so as to restrain the filter **29** from being elastically deformed, and to prevent the end surface **40** of the filter **29** from floating up from the outer surface of the flat part **37**.

A screw fitting part **41** is embedded in the top part **35**, as shown in **Fig. 1A** and **4B,** and a net retaining bolt **42** can be tightened into the screw fitting part **41**. The net retaining bolt **42** has a large diameter head part **42A** by which the outer net **28** is integrally incorporated with the top part **35** of the inner frame **27**.

The outer net **28** is formed of a honeycomb-like (hexagonal) net in a substantially semi-spherical shape. With this honeycomb-like net, deformation in the curved part **28A** of the outer net **28** is equally divided into six portions at comer parts of the hexagon, and accordingly, the degree of the deformation at each corner becomes smaller than that of a rectangular net.

As shown in **Fig. 1A**, the filter **29** is composed of an outer filter **43** and an inner filter **44** which are joined together in a two layer structure, and which are formed of polyurethane resin. That is, the outer filter **43** is made of polyurethane resin having a large coarse pore size, but the inner filter **44** is made of polyurethane resin having an intermediate pore size. The outer filter **43** and the inner filter **44** are bonded together by heating and melting their bonding surfaces (which is the so-called lamination).

The outer filter **43** and the inner filter **44** are impregnated with a highly viscous adhesive (which is not shown) in order to enhance the dust collecting effect. For example, chlorinated paraffin is used as the highly viscous adhesive, preferably having a coefficient of viscosity which is higher than about 100 pa.s and lower than about 350 pa.s. The fibers of the outer filter **43** and the inner filter **44** are swollen and softened with the use of a solvent (such as methylene chloride or thinner), and thereafter, the softened fibers are impregnated with the highly viscous adhesive.

Next, explanation will be hereinbelow made of operation and effects.

Air flowing from the outer periphery of the air-cleaner apparatus **19** and passing through the meshes of the outer net **28**, passes through the filter **29** and flows along the top part **35** of the inner frame **27** and the frame bars **36**, and then flows into the duct part **30** along the lip part **33** and the flared opening **31** of the funnel **26**. During passing through the filter **29**, dust is removed from the air.

With the above-mentioned embodiment, since the lip part **33** is planted on the inner peripheral surface of the flared opening **31** of the funnel **26**, the stream A of air induces the negative pressure area B between the lip part **33** of the funnel **26** and the flat part **32** so as to increase the flow rate of air flowing into the duct part **30** of the funnel **26** from the outer side of the flat part **37** of the inner frame **27**, whereby it is possible to increase the volume of intake-air. Thus, it is possible to enhance the intake-air efficiency without the size of the air-cleaner apparatus **29** being increased by increasing the size of the funnel **26**.

Further, since the inner frame **27** is composed of the top part **35** extending to the center part of the funnel **26**, and since the top part **35** is composed of a plurality of the frame bars **36** radially extending from the top part **35** and having a stream line cross-sectional shape, the stream A of air flowing into the funnel **26** can be smoothed so as to reduce the flow passage resistance, whereby it is possible to enhance the intake-air efficiency.

Further, since the flat part **37** of the inner frame **27** is flush with the flat part **32** of the funnel **26** in the assembled condition between the funnel **26** and the inner frame **27**, the stream of air flowing through the flat parts **32, 37** is not hindered, whereby it is possible to further enhance the intake-air efficiency.

Since the outer net **28** is formed of a honeycomb-like net in a substantially semi-spherical shape, deformation of the honeycomb net occurring in the curved part **28A** is equally divided into **6** portions so that deformation at each corner of the honeycomb cell can be made smaller than that of a rectangular cell. Accordingly, it is possible to prevent the stream A of intake-air from being hindered by the outer net **28**, and in view of this point, it is possible to further enhance the intake-air efficiency.

Further, since the filter **29** is made of porous polyurethane resin, and since the filter **29** is impregnated with the highly viscous adhesive, the dust collecting effect can be enhanced by the highly viscous adhesive. Simultaneously, since the filter **29** can be impregnated with the highly viscous adhesive even though it has a large pore size, the flow passage resistance of the filter **29** becomes small, in comparison with such a case that the filter **29** is made of porous polyurethane resin having a small pore size.

In addition, since the engaging ridge **39** is formed on the flat part 37 of the inner frame **27** and is adapted to lock the end surface **40** of the filter **29**, it is possible to prevent the end surface **40** from floating up, whereby it is possible to prevent lowering the dust collecting effect of the filter **19**.

As mentioned above, the air filer apparatus for engine intake-air, according to the present invention, can enhance both dust collecting effect and intake-air efficiency of the air filter apparatus.

## Claims

1. An air cleaner apparatus comprising an inner frame (27) and an outer frame (28) with which a flared opening (31) of a funnel (26) is covered, and a filter (29) interposed between said frames, wherein a lip part (33) is integrally planted on the inner peripheral surface of said flared opening (31) of said funnel (26), being opposed to an air stream direction such that a negative pressure area (B) is induced upstream of and below said lip part (33).

2. An air-cleaner apparatus as set forth in claim 1, wherein the inner frame (27) is composed of a top part (35) extending toward a center of said flared opening (31) of said funnel (26), and a plurality of frame bars (36) extending radially from said top part (35).

3. An air-cleaner apparatus as set forth in claim 1 or 2, wherein said outer frame is formed of a honeycomb-like net (28).

4. An air-cleaner apparatus as set forth in any one of claims 1 to 3, wherein said filter (29) is made of a porous resin having a large pore size and impregnated with a highly viscous adhesive.

5. An air-cleaner apparatus as set forth in any one of claims 1 to 4, wherein a flat part (32) is connected to the flared opening (31) below said lip part (33) and said negative pressure area (13) is induced between said lip part (33) and said flat part (32).

6. An air-cleaner apparatus as set forth in claims 2 and 5, wherein said inner frame (27) comprises a flat part (37) extending radially outwardly from said frame bars (36) and wherein said flat part (37) is flush with said flat part (32) of said funnel (26) in the assembled condition.

7. An air-cleaner apparatus as set forth in claim 6, wherein said flat part (32) of said funnel (26) comprises at its outer periphery a stepped portion (34) and said flat part (37) of said inner frame (27) comprises at its inner periphery an engaging step (38) engaged with said stepped portion in the assembled condition.

## Patentansprüche

1. Luftreinigervorrichtung, umfassend einen Innenrahmen (27) und einen Außenrahmen (28), mit welchen eine aufgeweitete Öffnung (31) eines Schachts (26) abgedeckt ist, und einen zwischen den Rahmen eingesetzten Filter (29), wobei ein Lippenabschnitt (33) einstückig auf der Innenumfangsfläche der aufgeweiteten Öffnung (31) des Schachts (26) eingesetzt ist, wobei dieser einer Luftstromrichtung entgegengerichtet ist, so daß ein Unterdruckbereich B stromaufwärts von und unter dem Lippenabschnitt (33) erzeugt wird.

2. Luftreinigervorrichtung nach Anspruch 1, wobei der Innenrahmen (27) aus einem oberen Abschnitt (35), welcher zu einer Mitte der aufgeweiteten Öffnung (31) des Schachts (26) verläuft, und einer Vielzahl von Rahmenstangen (36), welche radial von dem oberen Abschnitt (35) ausgehen, zusammengesetzt ist.

3. Luftreinigervorrichtung nach Anspruch 1 oder 2, wobei der Außenrahmen aus einem bienenwabenartigen Netz (28) gebildet ist.

4. Luftreinigervorrichtung nach einem der Ansprüche 1 bis 3, wobei der Filter (29) aus einem porösen Harz hergestellt ist, welches eine große Porengröße aufweist und mit einem hochviskosen Klebstoff imprägniert ist.

5. Luftreinigervorrichtung nach einem der Ansprüche 1 bis 4, wobei ein flacher Abschnitt (32) mit der aufgeweiteten Öffnung (31) unter dem Lippenabschnitt (33) verbunden ist und der Unterdruckbereich (13) zwischen dem Lippenabschnitt (33) und dem flachen Abschnitt (32) erzeugt wird.

6. Luftreinigervorrichtung nach Anspruch 2 und 5, wobei der Innenrahmen (27) einen flachen Abschnitt (37) umfaßt, welcher mit dem flachen Abschnitt (32) des Schachts (26) in dem Anordnungszustand bündig ist.

7. Luftreinigervorrichtung nach Anspruch 6, wobei der flache Abschnitt (32) des Schachts (26) an dessen Außenumfang einen Stufenabschnitt (34) umfaßt und der flache Abschnitt des Innenrahmens (27) an dessen Innenumfang eine Eingriffsstufe (38) in Eingriff mit dem Stufenabschnitt in dem Anordnungszustand umfaßt.

## Revendications

1. Dispositif d'épuration d'air comprenant une structure interne (27) et une structure externe (28) recouvrant une ouverture évasée (31) d'un entonnoir (26), et un filtre (29) intercalé entre lesdites structures, dans lequel une lèvre (33) est réalisée d'une pièce sur la surface périphérique intérieure de ladite ouverture évasée (31) dudit entonnoir (26), en étant opposée à un sens d'écoulement d'air de sorte qu'une zone (B) de pression négative est induite en amont et en dessous de ladite lèvre (33).

2. Dispositif d'épuration d'air selon la revendication 1, dans lequel la structure interne (27) est composée d'une partie supérieure (35) s'étendant vers le centre de ladite ouverture évasée (31) dudit entonnoir (26), et d'une pluralité de bras (36) de structure s'étendant radialement depuis ladite partie supérieure (35).

3. Dispositif d'épuration d'air selon la revendication 1 ou 2, dans lequel ladite structure externe est formée d'une grille en nid d'abeilles (28).

4. Dispositif d'épuration d'air selon l'une quelconque des revendications 1 à 3, dans lequel ledit filtre (29) est fait d'une résine poreuse présentant une grande taille de pores et imprégnée d'un adhésif très visqueux.

5. Dispositif d'épuration d'air selon l'une quelconque des revendications 1 à 4, dans lequel une partie plate (32) est connectée à l'ouverture évasée (31) sous ladite lèvre (33) et ladite zone (B) de pression négative est induite entre ladite lèvre (33) et ladite partie plate (32).

6. Dispositif d'épuration d'air selon la revendication 2 ou 5, dans lequel ladite structure interne (27) comprend une partie plate (37) s'étendant radialement vers l'extérieur depuis lesdits bras (36) de structure et dans lequel ladite partie plate (37) est à niveau avec ladite partie plate (32) dudit entonnoir (26) une fois assemblée.

7. Dispositif d'épuration d'air selon la revendication 6, dans lequel ladite partie plate (32) dudit entonnoir (26) comprend, au niveau de sa périphérie extérieure, un décrochement (34), et ladite partie plate (37) de ladite structure interne (27) comprend, au niveau de sa périphérie intérieure, un décrochement à emboîtement (38) emboîté avec ledit décrochement (34) une fois assemblé.
